# FASCICULE DE BREVET EUROPEEN

(11) **EP 0 502 761 B1**
(45) Date de publication et mention de la délivrance du brevet: **27.04.1994**
(21) Numéro de dépôt: 92400488.0
(22) Date de dépôt: 25.02.1992
(51) Int. Cl.: B62D 1/16, B21C 37/15, B21D 35/00

(54) **Tube-corps de colonne de direction pour véhicule automobile**
Lenksäulenrohr und Gehäuse für Kraftfahrzeug
Steering column tube and frame for automotive vehicle

(30) Priorité: 04.03.1991 FR 9102559
(43) Date de publication de la demande: 09.09.1992
(73) Titulaire: NACAM, F-41100 Vendôme (FR)
(72) Inventeur: Sevault, Bernard, F-41100 Vendome (FR); Blais, Jean-René, F-41100 Vendome (FR)
(74) Mandataire: Le Brusque, Maurice

(56) Documents cités:
- DE-A- 2 905 130
- US-A- 2 202 909
- US-A- 3 273 601

## Description

La présente invention se rapporte à un tube-corps de colonne de direction pour véhicule automobile et notamment pour véhicule automobile de tourisme.

L'invention porte plus précisément sur un dispositif de colonne de direction constitué par un corps de colonne assemblé, dans lequel le tube-corps supporte, par l'intermédiaire de deux paliers, l'axe-volant de direction. Dans ce genre de dispositif de colonne de direction, l'invention concerne la conception et l'architecture du tube-corps.

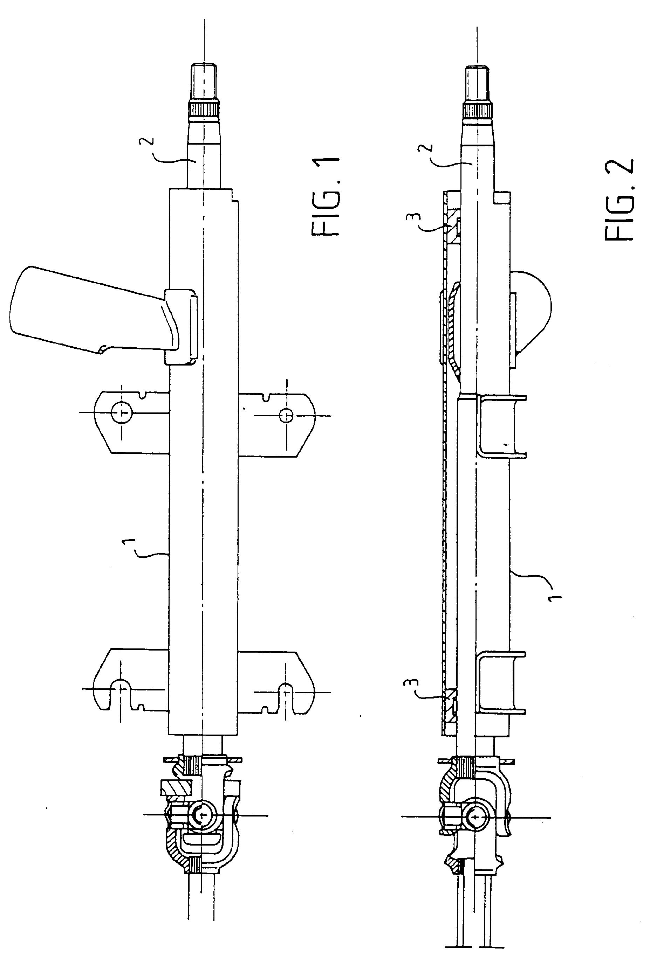

Dans les dispositifs de colonne de direction connus, comme celui qui est représenté sur les Figures 1 et 2, le tube-corps 1 est généralement constitué par un tube sur lequel sont rapportés les éléments nécessaires au montage et à la fixation de ce tube-corps. Le plus souvent, ces différents éléments sont soudés directement sur ce tube, ou dans d'autres cas, ils sont solidarisés par des moyens de fixation. Dans le cas de solidarisation par soudure de ces différents éléments, il est nécessaire d'avoir un positionnement précis de ces éléments par rapport au tube. De ce fait, un outillage de montage de soudure est indispensable. Malgré cela, il n'est pas possible d'éviter une imprécision de la position de ces différents éléments, du fait des écarts de tolérance des différentes composantes de l'ensemble et des déformations dues à la soudure. De plus, la soudure entraîne des contraintes résiduelles dans le tube-corps après sa réalisation. Dans le cas d'assemblage des différents éléments avec le tube central par l'intermédiaire de moyens de fixation, il est nécessaire de prévoir des montages complexes et relativement encombrants et lourds. Dans tous ces types de réalisation, il est nécessaire d'avoir un grand nombre de pièces élémentaires avec des opérations de préparation et d'assemblage en chaîne, qui augmentent le coût de réalisation, tout en présentant des écarts dimensionnels relativement importants ainsi que des contraintes résiduelles.

Le but de l'invention est d'éviter les inconvénients mentionnés ci-dessus et de proposer un tube-corps de colonne de direction pour véhicule automobile, qui soit constitué par un minimum d'éléments, de manière à garantir une précision dimensionnelle correcte, tout en offrant un prix de revient de fabrication le plus faible possible.

Selon l'invention, le tube-corps de colonne de direction pour véhicule automobile comporte un axe-volant monté dans le tube-corps par l'intermédiaire de deux paliers disposés sensiblement à chacune des extrémités de ce tube-corps. Le tube-corps est réalisé à partir d'une seule et même tôle, dans laquelle sont agencées deux pattes de fixation arrière et un tube à partir d'une découpe de flan de cette tôle. La découpe de flan comprend une découpe des deux pattes arrière avec leur élément central arrière, disposée entre une découpe d'un élément avant et une découpe d'un élément arrière. La découpe de l'élément avant, la découpe de l'élément central arrière et la découpe de l'élément arrière sont roulées, afin de ramener respectivement les deux bords de l'élément avant et les deux bords de l'élément arrière sensiblement l'un contre l'autre pour être solidarisés, de manière à réaliser le tube. Ce tube possède de plus une ouverture arrière entre les deux pattes de fixation arrière, la largeur de cette ouverture étant sensiblement égale à la largeur des pattes correspondantes, qui constituent avec ce tube une seule et même pièce monobloc.

Selon un mode de réalisation de l'invention, le tube-corps comporte en outre deux pattes de fixation avant disposées selon l'agencement défini dans la revendication 2.

Avantageusement, les deux bords de l'élément avant et les deux bords de l'élément arrière sont solidarisés respectivement l'un par rapport à l'autre soit par soudure, soit par sertissage, soit encore par agrafage. Dans ce dernier cas et selon une variante intéressante de l'invention, l'agrafage est constitué par des agrafes qui sont aménagées sur chacun des deux bords de l'élément avant et sur chacun des deux bords de l'élément arrière. Ces agrafes sont séparées les unes des autres par des logements, qui ont une forme correspondante avec des dimensions légèrement supérieures à celles de ces agrafes, de manière que chaque agrafe d'un bord puisse venir s'accrocher dans le logement correspondant de l'autre bord. Cet accrochage est réalisé par recouvrement des deux bords correspondants et pénétration dans le sens radial. Plus précisément, les logements ont un contour de forme sensiblement trapèzoïdale avec des arrondis de liaison entre le fond, les côtés et le bord correspondant.

Selon une configuration avantageuse de l'invention, un bras de liaison raccorde l'élément avant et l'élément arrière en reliant la partie de l'élément avant avec la partie de l'élément arrière, qui sont situées de part et d'autre de l'ouverture arrière. Ce bras de liaison est constitué par un élément allongé, qui est monté à l'extérieur du tube.

Dans une autre variante de réalisation de l'invention, ce bras de liaison est constitué par un élément allongé qui est monté à l'intérieur du tube.

Enfin de manière préférentielle, ce bras de liaison est soudé sur le tube.

Selon une variante de l'invention, le bras de liaison est intégré avec un renfort antivol.

Suivant une autre variante de l'invention, le bras de liaison est intégré avec un boîtier antivol.

Selon une autre variante de l'invention, le bras de liaison est intégré avec un carré renfort.

Afin d'améliorer encore les caractéristiques du tube-corps selon l'invention, chacune des pattes de fixation peut comporter un raidisseur, qui est obtenu par déformation directe dans la tôle.

Le tube-corps de colonne de direction selon l'invention présente ainsi l'avantage d'offrir une pièce monobloc qui intègre les pattes de fixation avec le corps. De plus, il permet de partir d'une seule et même tôle, ce qui évite les opérations de réalisation supplémentaires et supprime toutes les pièces élémentaires nécessaires dans les réalisations classiques. Ce type de conception selon l'invention est particulièrement avantageux dans les fabrications en série, car il limite le nombre des postes de réalisation des différentes étapes du tube-corps, ce qui supprime des manipulations entre ces différents postes, ainsi que des stockages de pièces qui augmentent le coût de réalisation final. De plus, il n'y a plus aucune soudure à proximité des pattes de fixation, ce qui évite toute erreur dimensionnelle et élimine les contraintes résiduelles dues à ces soudures.

D'autres avantages ressortiront de l'invention, qui sera mieux comprise à l'aide de la description donnée ci-dessous d'exemples particuliers de réalisation, décrits à titre non limitatif en référence aux dessins annexés sur lesquels :
- la Figure 1 est une vue de dessus de l'ensemble d'un dispositif de colonne de direction pour véhicule automobile faisant partie de l'état de la technique ;
- la Figure 2 est une vue longitudinale correspondant à la Figure 1, avec une demi-coupe axiale ;
- la Figure 3 est une vue en perspective cavalière du tube-corps selon l'invention ;
- la Figure 4 est une vue d'une découpe de flan de la tôle permettant la réalisation du tube-corps représenté sur la Figure 3.

L'invention se rapporte à une colonne de direction pour véhicule automobile comme celle qui est représentée sur les Figures 1 et 2, et qui comporte un axe-volant 2 monté dans un tube-corps 1 par l'intermédiaire de-deux paliers 3, qui sont disposés sensiblement à chacune des extrémités de ce tube-corps 1.

Le tube-corps, référencé 1 dans son ensemble, est constitué essentiellement par un tube, référencé 4 dans son ensemble, qui est muni de deux pattes de fixation avant 5 et de deux pattes de fiaxtion arrière 6, les pattes de fixation avant étant celles qui sont dirigées vers l'avant du véhicule automobile tandis que les pattes de fixation arrière sont celles qui sont le plus proches du volant de direction. Le tube 4 comporte un élément avant 7 et un élément arrière 8, l'élément avant 7 étant disposé entre les pattes de fixation avant 5 et les pattes de fixation arrière 6, qui sont elles-mêmes placées entre l'élément arrière 8 et l'élément avant 7. Les deux pattes de fixation avant 5 sont disposées de part et d'autre du tube 4 et elles sont reliées par un élément central avant 9. De la même façon, les deux pattes de fixation arrière 6 sont disposées de chaque côté du tube 4, et elles sont reliées par un élément central arrière 10. Enfin, le tube 4 possède une ouverture avant 11 disposée à l'endroit des deux pattes de fixation avant 5, et diamétralement opposée à l'élément central avant 9. Le tube 4 possède également une ouverture arrière 12 qui est disposée à l'endroit des deux pattes de fixation arrière 6, et qui est diamétralement opposée à l'élément central arrière 10.

Afin de renforcer la jonction de chacune des deux pattes avant 5 avec l'élément central avant 9, des raidisseurs 32 sont disposés à la jonction de chacune de ces deux pattes de fixation 5 avec cet élément central avant 9. De la même manière, des raidisseurs 32 sont aménagés à la jonction de chacune des deux pattes de fixation arrière 6 avec l'élément central arrière 10. Les deux bords 20 et 21 de l'élément avant 7 sont solidarisés respectivement l'un par rapport à l'autre par un système d'agrafage. De la même manière, les deux bords 22 et 23 de l'élément arrière 8 sont solidarisés respectivement l'un par rapport à l'autre également par agrafage.

Un bras de liaison 16 est aménagé de manière à raccorder l'élément avant 7 et l'élément arrière 8 du tube 4, afin de renforcer sa tenue mécanique. Pour cela, ce bras de liaison 16 relie la partie 30 de l'élément avant 7 avec la partie 31 de l'élément arrière 8, ces deux parties 30 et 31 étant situées de part et d'autre de l'ouverture arrière 12. Ce bras de liaison 16 est intégré avec un renfort antivol 17 qui est disposé sur l'élément avant 8, de manière que la lumière 18 de ce renfort antivol 17 coïncide avec une ouverture d'antivol 14, qui est aménagée dans cet élément arrière 8. L'ensemble du bras de liaison 16 avec le renfort d'antivol 17 est soudé à l'extérieur du tube 4, d'une part sur l'élément arrière 8, et d'autre part sur l'élément avant 7. Enfin, l'extrémité de l'élément arrière 8 comporte une encoche 13 qui sert à l'orientation du support de commodos.

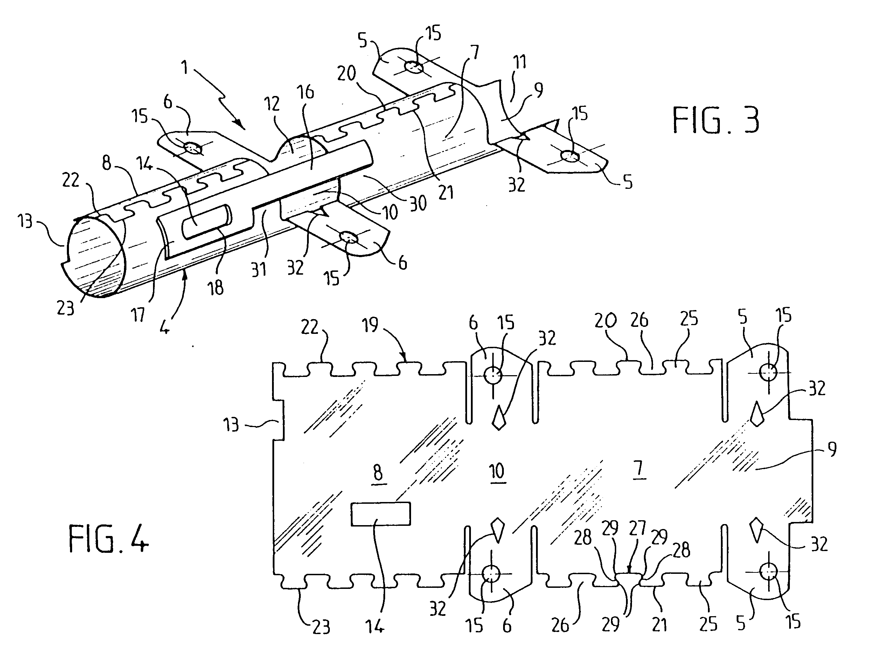

Le bras de liaison 16 qui est constitué par un élément allongé et qui est soudé à l'extérieur du tube 4 sur le mode de réalisation représenté sur la Figure 3, peut également, selon une variante de l'invention, être monté à l'intérieur de ce tube 4. Il peut également, dans ce cas, être soudé au tube 4 et être intégré avec un renfort antivol.

Selon une autre variante de l'invention qui n'est pas représentée sur les Figures, le bras de liaison 16 est intégré avec le boîtier antivol. Enfin, selon un autre mode de réalisation de l'invention, ce bras de liaison est intégré à un carré renfort qui est aménagé à la partie inférieure du tube 4.

Comme on peut le voir sur la Figure 4, le tube-corps 1 selon l'invention est réalisé à partir d'une seule et même tôle, dans laquelle sont agencées les deux pattes de fixation avant 5, les deux pattes de fixation arrière 6 et le tube 4 à partir d'une découpe de flan 19 de cette tôle. Cette découpe de flan 19 comprend une découpe des deux pattes avant 5 avec leur élément central avant 9, une découpe des deux pattes arrière 6 avec leur élément central 10 arrière, ainsi qu'une découpe de l'élément avant 7 située entre les pattes avant 5 et les pattes arrière 6, et une découpe de l'élément arrière 8. Le trou de fixation 15 qui est aménagé sur chacune des pattes de fixation 5 et 6, est réalisé sur cette découpe, ainsi que l'ouverture d'antivol 14 qui est disposée dans l'élément avant 8. De plus, les raidisseurs 32 sont obtenus par des déformés qui sont réalisés à la jonction de chacune des pattes de fixation avant 5 avec l'élément central avant 9, et à la jonction de chacune des pattes de fixation arrière 6 avec l'élément central arrière 10. Enfin, cette découpe de flan 19 comporte, à l'extrémité de l'élément arrière 8, l'encoche 13 destinée à l'orientation du support des commodos.

Chacun des deux bords 20 et 21 de l'élément avant 7 et des deux bords 22 et 23 de l'élément arrière 8 comporte des agrafes 25, qui sont séparées les unes des autres par des logements 26. Ces logements 26 ont une forme correspondante aux agrafes 25 avec des dimensions légèrement supérieures à celles-ci, de manière que chaque agrafe 25 d'un bord 20 ou d'un bord 22 puisse venir s'accrocher dans le logement 26 correspondant de l'autre bord 21 ou 23. Afin de permettre cet accrochage par l'entrée des agrafes 25 dans les logements correspondants 26, chacun de ces logements 26 a un contour de forme sensiblement trapèzoïdale avec des arrondis de liaison 29 qui sont disposés entre le fond 27 et les deux côtés 28, ainsi qu'entre ces deux côtés 28 et le bord correspondant 20, 21, 22 ou 23.

Pour obtenir le tube 4, la découpe de l'élément central avant 9, la découpe de l'élément avant 7, la découpe de l'élément central arrière 10, et la découpe de l'élément arrière 8 sont roulées, afin de ramener respectivement les deux bords 20 et 21 de l'élément avant 7 et les deux bords 22 et 23 de l'élément arrière 8 sensiblement l'un contre l'autre, pour être solidarisés par agrafage. Pour cela, l'accrochage est réalisé par recouvrement des deux bords 20 et 21, et des deux bords 22 et 23, et ensuite par pénétration dans le sens radial de chacune des agrafes 25 dans le logement 26 correspondant. On obtient ainsi le tube 4 recherché qui possède l'ouverture avant 11 pour les deux pattes de fixation avant 5, et l'ouverture arrière 12 pour les deux pattes de fixation arrière 6. La largeur de chacune de ces ouvertures 11 et 12 est sensiblement égale à la largeur des pattes de fixation correspondantes 5 et 6. Le tube 4 forme ainsi avec les pattes de fixation avant 5 et les pattes de fixation arrière 6 une seule et même pièce monobloc qui constitue le tube-corps 1.

Dans un mode de réalisation non représenté sur les Figures, les deux bords 20 et 21 de l'élément avant 7 et les deux bords 22 et 23 de l'élément arrière 8 sont solidarisés respectivement l'un par rapport à l'autre par soudure.

Dans une autre variante de l'invention non représentée sur les Figures, les deux bords 20 et 21 de l'élément avant 7 et les deux bords 22 et 23 de l'élément arrière 8 sont solidarisés respectivement l'un par rapport à l'autre par sertissage.

Dans un mode de réalisation de l'invention qui n'est pas représenté sur les Figures, le tube-corps 1 de colonne de direction pour véhicule automobile comporte uniquement deux pattes de fixation arrière 6 avec le tube 4. Dans cette configuration, les pattes de fixation arrière sont disposées entre l'élément avant 7 et l'élément arrière 8 du tube 4. Le tube-corps 1 est alors obtenu d'une manière analogue à celle décrite précédemment, c'est-à-dire qu'il est réalisé à partir d'une seule et même tôle, dans laquelle sont agencées les deux pattes de fixation arrière 6 et le tube 4, à partir d'une découpe de flan 19 de cette tôle. Cette découpe de flan 19 comprend une découpe des pattes arrière 6 avec leur élément central 10 arrière, qui est disposée entre une découpe de l'élément avant 7 et une découpe de l'élément arrière 8. La découpe de l'élément avant 7, la découpe de l'élément central arrière 10 et la découpe de l'élément arrière 8 sont roulées, afin de ramener respectivement les deux bords 20 et 21 de l'élément avant 7 et les deux bords 22 et 23 de l'élément arrière 8 sensiblement l'un contre l'autre, pour être solidarisés de manière à réaliser ce tube 4. Cette solidarisation peut se faire, comme on l'a vu précédemment, par agrafage, par soudure ou par sertissage. Dans ce mode de réalisation de l'invention, le tube 4 possède une ouverture arrière 12 pour les deux pattes de fixation arrière 6, dont la largeur est sensiblement égale à la largeur de ces pattes de fixation arrière 6. Le tube 4 forme ainsi avec les deux pattes de fixation arrière 6 une seule et même pièce monobloc qui constitue le tube-corps 1. On peut également, comme dans le mode de réalisation représenté sur les Figures, prévoir un bras de liaison 16 qui raccorde l'élément avant 7 et l'élément arrière 8. De la même manière, ce bras de liaison 16 peut être monté à l'extérieur ou à l'intérieur du tube 4 sur lequel il est soudé.

Selon différentes variantes de l'invention, le bras de liaison 16 peut également, comme dans les modes de réalisation précédents, être intégré avec le renfort antivol 17, ou être intégré avec un boîtier antivol ou bien être intégré avec le carré renfort aménagé à la partie inférieure du tube 4, il peut aussi être intégré à une patte support-commodos ou à une patte support de coquille sous le volant.

Le tube-corps 1 selon l'invention avec son bras de liaison 16 permet d'obtenir un ensemble particulièrement rigide à la flexion, avec une fréquence propre correcte qui permet la transmission des efforts entre l'élément avant 7 et l'élément arrière 8. De plus, cette conception du tube-corps 1 selon l'invention permet d'avoir un ensemble qui répond aux conditions de normes relatives au couple antivol et à la déflexion statique due au conducteur.

## Revendications

1. Tube-corps (1) de colonne de direction pour véhicule automobile comportant un axe-volant (2) monté dans le tube-corps (1) par l'intermédiaire de deux paliers (3) disposés sensiblement à chacune des extrémités de ce tube-corps (1), caractérisé en ce que le tube-corps (1) est réalisé à partir d'une seule et même tôle, dans laquelle sont agencées deux pattes de fixation arrière (6) et un tube (4) à partir d'une découpe de flan (19) de cette tôle, qui comprend une découpe des pattes arrière (6) avec leur élément central (10) arrière, disposée entre une découpe d'un élément avant(7) et une découpe d'un élément arrière (8) ; la découpe de l'élément avant (7), la découpe de l'élément central arrière (10) et la découpe de l'élément arrière (8) étant roulées, afin de ramener respectivement les deux bords (20) et (21) de l'élément avant (7) et les deux bords (22) et (23) de l'élément arrière (8) sensiblement l'un contre l'autre pour être solidarisés de manière à réaliser ce tube (4), qui possède une ouverture arrière (12) pour les deux pattes de fixation arrière (6), dont la largeur est sensiblement égale à la largeur de ces pattes de fixation arrière (6), qui constituent avec le tube (4) une seule et même pièce monobloc.

2. Tube-corps (1) selon la revendication 1, caractérisé en ce que le tube-corps (1) est réalisé à partir d'une seule et même tôle, dans laquelle sont agencées deux pattes de fixation avant (5) avec les deux pattes de fixation arrière (6) et le tube (4) à partir d'une découpe de flan (19) de cette tôle, qui comprend une découpe des deux pattes avant (5) avec leur élément central avant (9), la découpe des deux pattes arrière (6) avec leur élément central arrière (10), ainsi que la découpe d'un élément avant (7) située entre les pattes avant (5) et les pattes arrière (6) et la découpe de l'élément arrière (8) ; la découpe de l'élément central avant (9), la découpe de l'élément avant (7), la découpe de l'élément central arrière (10), la découpe de l'élément arrière (8) étant roulées, afin de ramener respectivement les deux bords (20) et (21) de l'élément avant (7) et les deux bords (22) et (23) de l'élément arrière (8) sensiblement l'un contre l'autre, pour être solidarisés de manière à réaliser ce tube (4) qui possède une ouverture avant (11) pour les deux pattes de fixation avant (5) et une ouverture arrière (12) pour les deux pattes de fixation arrière (6), la largeur de ces ouvertures (11) et (12) étant sensiblement égale à la largeur des pattes correspondantes (5) et (6) qui constituent avec le tube (4) une seule et même pièce monobloc.

3. Tube-corps (1) selon l'une des revendications 1 et 2, caractérisé en ce qu'un bras de liaison (16) raccorde l'élément avant (7) et l'élément arrière (8) en reliant la partie (30) de l'élément avant (7) avec la partie (31) de l'élément arrière (8), ces deux parties (30) et (31) étant situées de part et d'autre de l'ouverture arrière (12).

4. Tube-corps (1) selon l'une quelconque des revendications 1 à 3, caractérisé en ce que les deux bords (20) et (21) de l'élément avant (7) et les deux bords (22) et (23) de l'élément arrière (8) sont solidarisés respectivement l'un par rapport à l'autre par soudure.

5. Tube-corps (1) selon l'une quelconque des revendications 1 à 3, caractérisé en ce que les deux bords (20) et (21) de l'élément avant (7) et les deux bords (22) et (23) de l'élément arrière (8) sont solidarisés respectivement l'un par rapport à l'autre par sertissage.

6. Tube-corps (1) selon l'une quelconque des revendications 1 à 3, caractérisé en ce que les deux bords (20) et (21) de l'élément avant (7) et les deux bords (22) et (23) de l'élément arrière (8) sont solidarisés respectivement l'un par rapport à l'autre par agrafage.

7. Tube-corps (1) selon la revendication 6, caractérisé en ce que l'agrafage est constitué par des agrafes (25) aménagées sur chacun des deux bords (20) et (21) de l'élément avant (7) et les deux bords (22) et (23) de l'élément arrière (8), ces agrafes (25) étant séparées les unes des autres par des logements (26), qui ont une forme correspondante avec des dimensions légèrement supérieures à celles de ces agrafes (25), de manière que chaque agrafe (25) d'un bord (20, 22) puisse venir s'accrocher dans le logement (26) correspondant de l'autre bord (21, 23), cet accrochage étant réalisé par recouvrement des deux bords (20, 21) et (22, 23) et pénétration dans le sens radial.

8. Tube-corps (1) selon la revendication 7, caractérisé en ce que les logements (26) ont un contour de forme sensiblement trapèzoïdale avec des arrondis de liaison (29) entre le fond (27), les côtés (28) et le bord correspondant (20, 21, 22, 23).

9. Tube-corps (1) selon l'une quelconque des revendications 3 à 8, caractérisé en ce que le bras de liaison (16) est constitué par un élément allongé.

10. Tube-corps (1) selon la revendication 9, caractérisé en ce que le bras de liaison (16) est monté à l'extérieur du tube (4).

11. Tube-corps (1) selon la revendication 9, caractérisé en ce que le bras de liaison (16) est monté à l'intérieur du tube (4).

12. Tube-corps (1) selon l'une des revendication 3 à 11, caractérisé en ce que le bras de liaison (16) est soudé sur le tube (4).

13. Tube-corps (1) selon l'une des revendications 3 à 12, caractérisé en ce que le bras de liaison (16) est intégré avec un renfort antivol (17).

14. Tube-corps (1) selon l'une des revendications 3 à 12, caractérisé en ce que le bras de liaison (16) est intégré avec un boîtier antivol.

15. Tube-corps (1) selon l'une des revendications 3 à 12, caractérisé en ce que le bras de liaison (16) est intégré avec un carré renfort.

16. Tube-corps (1) selon l'une des revendications 3 à 12, caractérisé en ce que le bras de liaison (16) est intégré avec une patte support-commodos.

17. Tube-corps (1) selon l'une des revendications 3 à 12, caractérisé en ce que le bras de liaison (16) est intégré avec une patte support de coquille sous le volant.

## Patentansprüche

1. Lenksäulenrohrkörper (1) für ein Kraftfahrzeug mit einer Lenkradachse (2), die im Rohrkörper (1) über zwei Lager (3) angebracht ist, die im wesentlichen an beiden Enden des Rohrkörpers (1) angeordnet sind, dadurch gekennzeichnet, daß der Rohrkörper (1) aus ein und demselben Blech, an dem zwei hintere Befestigungszungen (6) vorgesehen sind, und einem Rohr (4) aus einem Blechabschnitt (19) dieses Bleches gebildet ist, der einen Abschnitt der hinteren Befestigungszungen (6) mit deren mittleren hinteren Teil (10) umfaßt, der zwischen einem Abschnitt eines vorderen Elementes (7) und einem Abschnitt eines hinteren Elementes (8) angeordnet ist, wobei der Abschnitt des vorderen Elementes (7), der Abschnitt des mittleren hinteren Teils (10) und der Abschnitt des hinteren Elementes (8) rundgebogen sind, derart, daß die beiden Ränder (20, 21) des vorderen Elementes (7) und die beiden Ränder (22, 23) des hinteren Elementes (8) jeweils im wesentlichen gegeneinander zurückgeführt sind, um sie zur Bildung des Rohres (4) zu vereinigen, das eine hintere Öffnung (12) für die beiden hinteren Befestigungszungen (6) aufweist, deren Größe im wesentlichen gleich der Größe der hinteren Befestigungszungen (6) ist, die mit dem Rohr (4) ein und dasselbe einteilige Bauteil bilden.

2. Rohrkörper (1) nach Anspruch 1, dadurch gekennzeichnet, daß der Rohrkörper (1) aus ein und demselben Blech, in dem zwei vordere Befestigungszungen (5) zusammen mit den beiden hinteren Befestigungszungen (6) vorgesehen sind, und dem Rohr (4) aus einem Blechabschnitt (19) dieses Bleches gebildet ist, der einen Abschnitt der beiden vorderen Befestigungszungen (5) mit deren vorderem mittleren Teil (9), den Abschnitt der beiden hinteren Befestigungszungen (6) mit deren hinteren mittleren Teil (10), den Abschnitt des vorderen Elementes (7), das zwischen den vorderen Befestigungszungen (5) und den hinteren Befestigungszungen (6) angeordnet ist, und den Abschnitt des hinteren Elementes (8) umfaßt, wobei der Abschnitt des vorderen mittleren Teils (9), der Abschnitt des vorderen Elementes (7), der Abschnitt des hinteren mittleren Teils (10) und der Abschnitt des hinteren Elementes (8) rundgebogen sind, derart, daß die beiden Ränder (20, 21) des vorderen Elementes (7) und die beiden Ränder (22, 23) des hinteren Elementes (8) im wesentlichen gegeneinander zurückgeführt sind, um sie zur Bildung des Rohres (4) zu vereinigen, das eine vordere Öffnung (11) für die beiden vorderen Befestigungszungen (5) und eine hintere Öffnung (12) für die beiden hinteren Befestigungszungen (6) aufweist, wobei die Größe dieser Öffnungen (11, 12) im wesentlichen gleich der Größe der entsprechenden Befestigungszungen (5, 6) ist, die mit dem Rohr (4) ein und dasselbe einteilige Bauteil bilden.

3. Rohrkörper (1) nach einem der Ansprüche 1 und 2, dadurch gekennzeichnet, daß ein Verbindungsbügel (16) das vordere Element (7) und das hintere Element (8) verbindet, wobei er einen Teil (30) des vorderen Elementes (7) mit einem Teil (31) des hinteren Elementes (8) verbindet und diese beiden Teile (30, 31) auf der einen und der anderen Seite der hinteren Öffnung (12) angeordnet sind.

4. Rohrkörper (1) nach einem der Ansprüche 1 bis 3, dadurch gekennzeichnet, daß die beiden Ränder (20, 21) des vorderen Elementes (7) und die beiden Ränder (22, 23) des hinteren Elementes (8) durch Schweißen jeweils miteinander vereinigt sind.

5. Rohrkörper (1) nach einem der Ansprüche 1 bis 3, dadurch gekennzeichnet, daß die beiden Ränder (20, 21) des vorderen Elementes (7) und die beiden Ränder (22, 23) des hinteren Elementes (8) durch Bördeln jeweils miteinander vereinigt sind.

6. Rohrkörper (1) nach einem der Ansprüche 1 bis 3, dadurch gekennzeichnet, daß die beiden Ränder (20, 21) des vorderen Elementes (7) und die beiden Ränder (22, 23) des hinteren Elementes (8) durch Klammern jeweils miteinander vereinigt sind.

7. Rohrkörper (1) nach Anspruch 6, dadurch gekennzeichnet, daß die Klammerung aus Heftklammern (25) besteht, die an jedem der beiden Ränder (20, 21) des vorderen Elementes (7) und der beiden Ränder (22, 23) des hinteren Elementes (8) vorgesehen sind, wobei die Heftklammern (25) durch Aufnahmen (26) getrennt sind, die eine entsprechende Form und Abmessungen haben, die etwas größer als die der Heftklammern (25) sind, derart, daß jede Heftklammer (25) eines Randes (20, 22) sich in die entsprechende Aufnahme (26) des anderen Randes (21, 23) einhaken kann und dieses Einhaken dadurch erfolgt, daß die beiden Ränder (20, 21) und (22, 23) übereinander greifen und in radialem Sinn ineinander greifen.

8. Rohrkörper (1) nach Anspruch 7, dadurch gekennzeichnet, daß die Aufnahmen (26) einen Umriß haben, dessen Form im wesentlichen trapezförmig mit Anschlußabrundungen (29) zwischen der Basis (27), den Seiten (28) und dem entsprechenden Rand (20, 21, 22, 23) ist.

9. Rohrkörper (1) nach einem der Ansprüche 3 bis 8, dadurch gekennzeichnet, daß der Verbindungsbügel (16) aus einem langgestreckten Bauelement besteht.

10. Rohrkörper (1) nach Anspruch 9, dadurch gekennzeichnet, daß der Verbindungsbügel (16) an der Außenseite des Rohres (4) angebracht ist.

11. Rohrkörper (1) nach Anspruch 9, dadurch gekennzeichnet, daß der Verbindungsbügel (16) an der Innenseite des Rohres (4) angebracht ist.

12. Rohrkörper (1) nach einem der Ansprüche 3 bis 11, dadurch gekennzeichnet, daß der Verbindungsbügel (16) an das Rohr (4) geschweißt ist.

13. Rohrkörper (1) nach einem der Ansprüche 3 bis 12, dadurch gekennzeichnet, daß der Verbindungsbügel (16) in einem Stück mit einer Diebstahlsicherungsverstärkung (17) ausgebildet ist.

14. Rohrkörper (1) nach einem der Ansprüche 3 bis 12, dadurch gekennzeichnet, daß der Verbindungsbügel (16) in einem Stück mit einer Diebstahlsicherungsbuchse ausgebildet ist.

15. Rohrkörper (1) nach einem der Ansprüche 3 bis 12, dadurch gekennzeichnet, daß der Verstärkungsbügel (16) in einem Stück mit einem Verstärkungsvierkant ausgebildet ist.

16. Rohrkörper (1) nach einem der Ansprüche 3 bis 12, dadurch gekennzeichnet, daß der Verbindungsbügel (16) in einem Stück mit einer geeigneten Halteplatte ausgebildet ist.

17. Rohrkörper (1) nach einem der Ansprüche 3 bis 12, dadurch gekennzeichnet, daß der Verbindungsbügel (16) in einem Stück mit einer Halteschale unter dem Lenkrad ausgebildet ist.

## Claims

1. Outer tube (1) of a motor vehicle steering column comprising a steering shaft (2) mounted in the outer tube (1) by means of two bearings (3) disposed substantially at each end of this outer tube (1), characterised in that the outer tube (1) is produced from a single metal sheet in which there are provided two rear attachment lugs (6) and a tube (4) made from a blank cut-out (19) of this metal sheet, comprising a cut-out for the rear lugs (6) with their central rear component (10), disposed between a cut-out for a front component (7) and a cut-out of a rear component (8); the cut-out for the front component (7), the cut-out for the central rear component (10) and the cut-out for the rear component (8) being rolled in order to bring the two edges (20) and (21) respectively of the front component (7) and the two edges (22) and (23) of the rear component (8) substantially adjacent one another such that they can be rendered integral in order to form this tube (4) which has a rear aperture (12) for the two rear attachment lugs (6), of which the width is substantially equal to the width of these rear attachment lugs (6), which together with the tube (4) form a single, integral part.

2. Outer tube (1) according to Claim 1, characterised in that the outer tube (1) is produced from a single metal sheet in which are provided two front attachment lugs (5) and the two rear attachment lugs (6) and the tube (4) made from a blank cut-out (19) of this metal sheet, comprising a cut-out for the two front lugs (5) with their central front component (9), the cut-out for the two rear lugs (6) with their central rear component (10) and the cut-out of a front component (7) disposed between the front lugs (5) and the rear lugs (6) and the cut-out for the rear component (8); the cut-out for the central front component (9), the cut-out for the front component (7), the cut-out for the central rear component (10) and the cut-out for the rear element (8) being rolled in order to bring the two edges (20) and (21) respectively of the front component (7) and the two edges (22) and (23) of the rear component (8) substantially adjacent one another such that they can be rendered integral in order to form this tube (4) which has a front aperture (11) for the two front attachment lugs (5) and a rear aperture (12) for the two rear attachment lugs (6), the width of these apertures (11) and (12) being substantially equal to the width of the corresponding lugs (5) and (6), which together with the tube (4) form a single, integral part.

3. Outer tube (1) according to either of Claims 1 or 2, characterised in that a connection arm (16) connects the front component (7) and the rear component (8) by joining the part (30) of the front component (7) to the part (31) of the rear component (8), these two parts (30) and (31) being disposed on either side of the rear aperture (12).

4. Outer tube (1) according to any one of Claims 1 to 3, characterised in that the two edges (20) and (21) of the front component (7) and the two edges (22) and (23) of the rear component (8) are rendered integral respectively relative to one another by welding.

5. Outer tube (1) according to any one of Claims 1 to 3, characterised in that the two edges (20) and (21) of the front component (7) and the two edges (22) and (23) of the rear component (8) are rendered integral respectively relative to one another by crimping.

6. Outer tube (1) according to any one of Claims 1 to 3, characterised in that the two edges (20) and (21) of the front component (7) and the two edges (22) and (23) of the rear component (8) are rendered integral respectively relative to one another by clipping.

7. Outer tube (1) according to Claim 6, characterised in that the clipping is performed by clips (25) disposed on each of the two edges (20) and (21) of the front component (7) and on the two edges (22) and (23) of the rear component (8), these clips (25) being separated from one another by recesses (26) which have a form corresponding to and slightly larger than that of the clips (25), such that each clip (25) on one edge (20, 22) can engage in the corresponding recess (26) in the other side (21, 23), this clipping taking the form of overlapping and racial penetration of the two edges (20, 21) and (22, 23).

8. Outer tube (1) according to Claim 7, characterised in that the recesses (26) have a substantially trapezoidal contour with rounded joining areas (29) between the base (27), the sides (28) and the corresponding edge (20, 21, 22, 23).

9. Outer tube (1) according to any one of Claims 3 to 8, characterised in that the connection arm (16) comprises an elongate component.

10. Outer tube (1) according to Claim 9, characterised in that the connection arm (16) is mounted outside the tube (4).

11. Outer tube (1) according to Claim 9, characterised in that the connection arm (16) is mounted inside the tube (4).

12. Outer tube (1) according to any one of Claims 3 to 11, characterised in that the connection arm (16) is welded onto the tube (4).

13. Outer tube (1) according to any one of Claims 3 to 12, characterised in that the connection arm (16) is integral with an anti-theft reinforcement (17).

14. Outer tube (1) according to any one of Claims 3 to 12, characterised in that the connection arm (16) is integral with an anti-theft casing.

15. Outer tube (1) according to any one of Claims 3 to 12, characterised in that the connection arm (16) is integral with a square reinforcement.

16. Outer tube (1) according to any one of Claims 3 to 12, characterised in that the connection arm (16) is integral with a support lug for the switch start unit.

17. Outer tube (1) according to any one of Claims 3 to 12, characterised in that the connection arm (16) is integral with a shell support bracket under the steering wheel.
